# EUROPÄISCHE PATENTANMELDUNG

(11) **EP 1 464 250 A1**
(43) Veröffentlichungstag der Anmeldung: **06.10.2004**
(21) Anmeldenummer: 04006897.5
(22) Anmeldetag: 23.03.2004
(51) Int. Cl.: A47B 31/02

(54) **Andockstation mit Hebevorrichtung für Transportwagen**

(30) Priorität: 01.04.2003 DE 20305293 U
(71) Anmelder: Hupfer Metallwerke GmbH & Co., 48653 Coesfeld (DE)
(72) Erfinder: Schumacher, Helmut, 48653 Coesfeld (DE)
(74) Vertreter: Habbel, Ludwig (Lutz), Dipl.-Ing.

(57) **Zusammenfassung**

Die Erfindung bezieht sich auf eineAndockstation zum Erwärmen von Speisen, die in einem Tablett-Transportwagen auf einer Vielzahl von im Abstand übereinander angeordneten Tabletts befindlich sind, wobei die Andockstation eine Vielzahl von Heizeinrichtungen aufweist, derart, dass bei ausreichend weit an die Andockstation angenähertem Tablett-Transportwagen die Speisen durch die Heizeinrichtungen beheizbar sind, wobei schräg nach oben verlaufende Führungselemente an der Andockstation vorgesehen sind, welche den an die Andockstation heranfahrenden Tablett-Transportwagen bei zunehmender Annäherung anheben, derart, dass bei vollständig an die Andockstation (1) angenähertem Tablett-Transportwagen die Tabletts des Tablett-Transportwagens einen zum Beheizen vorgesehenen, vorbestimmten Abstand zu den Heizeinrichtungen (2) aufweisen.

## Beschreibung

Die Erfindung betrifft eine Andockstation nach dem Oberbegriff des Anspruchs 1.

Derartige Anordnungen sind aus der DE-U-202 10 556 bekannt. Die Beheizung der Speisen erfolgt dabei indirekt. Hierzu werden auf den Tabletts induktiv beheizbare Teller für die Speisen vorgesehen, wobei die an der Andockstation vorgesehenen Heizeinrichtungen dementsprechende Induktiv-Heizeinrichtungen sind, welche die Teller erwärmen. Nach dem Aufheizen dienen die Teller mit ihrer Wärmekapazität als Warmhalteplatten bis zur Ausgabe der Speisen.

Die gattungsgemäßen Geräte sehen eine Beweglichkeit der Heizeinrichtungen vor: während der Tablett-Transportwagen an die Andockstation angenähert wird, wobei sich die Heizeinrichtungen zunehmend zwischen die Tabletts des Tablett-Transportwagens erstrecken, besteht ein erster, vergleichsweise großer vertikaler Abstand zwischen den Heizeinrichtungen und den Tabletts. Wenn der Tablett-Transportwagen vollständig ein- bzw. aufgeschoben ist, also ausreichend weit an die Andockstation angenähert ist, um einen Heizvorgang starten zu können, so werden die Heizeinrichtungen angehoben, um durch einen zweite, vergleichsweise geringeren Abstand zu den Tabletts eine effektivere Beheizung zu ermöglichen. Als "Annäherung" wird dabei insbesondere der Abstand betrachtet, der sich zwischen dem Tablett-Transportwagen und dem Gehäuse der Andockstation ergibt, aus welchem die Heizeinrichtungen vorragen.

Der Erfindung liegt die Aufgabe zugrunde, eine gattungsgemäße Andockstation dahingehend zu verbessern, dass die Bedienung für das Personal vereinfacht wird und dass zuverlässig gleichmäßige Heizleistungsergebnisse erzielbar sind.

Diese Aufgabe wird durch eine Andockstation mit den Merkmalen des Anspruchs 1 gelöst.

Die Erfindung schlägt mit anderen Worten vor, nicht die Heizeinrichtungen höhenbeweglich auszugestalten, sondern den gesamten Tablett-Transportwagen mittels der Andockstation anzuheben. Dies ist zunächst überraschend, da der Tablett-Transportwagen ein erheblich größeres Gewicht aufweist als die Heizeinrichtungen, sodass zunächst die Bedienung für das Personal aufwendiger erscheint. Es hat sich jedoch herausgestellt, dass bei entsprechend leichtläufig ausgestalteten Führungselementen eine problemlose, nahezu unmerkliche Anhebung des Tablett-Transportwagens möglich ist.

Hierzu ist vorgesehen, den Tablett-Transportwagen nach seinem ersten Kontakt mit der Andockstation beim weiteren Annähern schräg aufwärts zu führen. Unter "schräg" wird dabei verstanden, daß die Vertikalbewegung geringer ist als die Horizontalbewegung des Tablett-Transportwagen, wobei die Führungselemente geradlinig schräg oder auch leicht gebogen aufwärts verlaufen können. Das Personal muss also lediglich den Transport-Wagen ausreichend weit an die Andockstation heranführen, wie dies bislang ohnehin auch der Fall war. Durch die schräg verlaufenden Führungselemente wird dabei der Tablett-Transportwagen automatisch auf die gewünschte Höhe angehoben, bis der Transportwagen so weit auf die Andockstation aufgeschoben ist bzw. an die Andockstation angenähert ist, dass der Heizvorgang gestartet werden kann. Dabei haben dann die Tabletts des Transportwagens automatisch den vorgesehenen Abstand zu den Heizeinrichtungen der Andockstation eingenommen.

Eine zusätzliche Handhabung der Heizelemente, um diese in ihrer Höhe zu verstellen, kann also entfallen, so dass überraschend die Bedienung für das Personal nicht nur nicht erschwert, sondern sogar vereinfacht wird. Zudem wird vorteilhaft durch das Anheben des Tablett-Transportwagens sichergestellt, dass dieser sich während des Heizvorgangs stets in einer definierten Höhe befindet. Unterschiedlicher Rollenverschleiß und damit eine unterschiedliche Distanz der Tabletts zum Boden, auf dem sich der Tablett-Transportwagen bzw. die Andockstation befinden, ist auf diese Weise ausgeschlossen.

Besonders kraftsparend und mühelos lässt sich der Tablett-Transportwagen bewegen, wenn an der Andockstation wenigstens ein Rollengang vorgesehen ist, sodass durch die Leichtläufigkeit der Rollen die Bewegung des Tablett-Transportwagens vereinfacht ist. In kinematischer Umkehr kann vorgesehen sein, an der Unterseite des Tablett-Transportwagens Rollen vorzusehen, die auf entsprechende Führungsschienen oder Führungsplatten der Andockstation auflaufen; die Ausgestaltung der Andockstation mit einem Rollengang hat jedoch den Vorteil, dass bereits vorhandene Tablett-Transportwagen ohne Umrüstung mit einer neuerungsgemäßen Andockstation verwendet werden können. Zudem ist die Zahl der Tablett-Transportwagen größer als die der Andockstationen, so daß es preisgünstiger ist, die Rollengänge an den Andockstationen vorzusehen.

Vorzugsweise ist ein Schalter vorgesehen, der die Beheizung erst dann ermöglicht, wenn sich der Tablett-Transportwagen in seiner korrekten Heizposition befindet, also ausreichend weit oder "vollständig" an die Andockstation angenähert ist. Dieser Schalter kann entweder lediglich eine Freigabe der Heizeinrichtungen bewirken, sodass mittels eines separaten Schalters der Heizvorgang gestartet wird, oder es kann für eine besonders einfache Bedienung der Anordnung vorgesehen sein, dass der vorerwähnte Schalter unmittelbar die Heizeinrichtungen nicht nur frei- sondern einschaltet, sodass der Heizvorgang automatisch gestartet wird, wenn der Tablett-Transportwagen in seine korrekte, vorgesehene Heizstellung gebracht worden ist.

Vorteilhaft können Riegelmittel vorgesehen sein, die die beiden Komponenten der Anordnung miteinander mechanisch verriegeln. Hierdurch ist sichergestellt, dass der Tablett-Transportwagen in seiner vorgesehenen Heizposition verbleibt, nachdem er diese einmal eingenommen. Während des Heizvorgangs kann so eine mangelnde Beheizung der Speisen bzw. eine unzulässige Überhitzung der Heizeinrichtungen ausgeschlossen werden.

Vorteilhaft werden die Riegelmittel nicht automatisch freigegeben, nachdem der Heizvorgang beendet worden ist, sondern vielmehr kann vorzugsweise eine mechanische Entriegelung dieser Riegelmittel vorgesehen sein, beispielsweise durch ein fußbetätigtes Pedal, einen manuell zu betätigenden Hebel oder dergleichen. So ist der an der Andockstation befindliche Tablett-Transportwagen gesichert und kann erst nach Lösen der Riegelmittel durch das Personal von der Andockstation entfernt werden.

Der zuvor erwähnte Schalter, welcher die Heizeinrichtungen freioder einschaltet, kann vorteilhaft durch die Riegelmittel selbst betätigt sein, sodass sichergestellt ist, dass der Transportwagen ausreichend weit an die Andockstation angenähert worden ist und zudem verriegelt ist, wenn der Heizvorgang gestartet wird.

Vorteilhaft kann zugunsten einer EMV-Verträglichkeit eine elektrisch leitfähige Verbindung zwischen dem Tablett-Transportwagen und der Andockstation geschaffen werden. Hierzu können Schleifkontakte oder ähnliche elektrisch leitende Elemente vorgesehen sein, die eine automatische derartige Verbindung schaffen, wenn der Tablett-Transportwagen an die Andockstation angenähert wird. Die manuelle Herstellung einer derartig elektrisch leitfähigen Verbindung, beispielsweise mittels eines Kabels oder dergleichen, ist daher nicht erforderlich, sodass auch hierdurch eine besonders einfache Bedienung der Anordnung begünstigt wird.

In besonders vorteilhafter Ausgestaltung einer derartig elektrisch leitfähigen Verbindung kann vorgesehen sein, dass wenigstens eine Rolle des Rollengangs elektrisch leitfähig ausgestaltet ist. Auf diese Weise ist eine reibungs- und verschleißarme Kontaktierung zwischen den beiden Komponenten sichergestellt, wobei zusätzlich die Gewichtsbelastung durch den Tablett-Transportwagen eine zuverlässige Kontaktierung unterstützt.

Durch den Wegfall von Bedienelementen, wie sie für die Höhenverstellbarkeit der Heizeinrichtungen im Stand der Technik vorgesehen sind, ergibt sich der Vorteil, dass keine seitlichen Hebel oder ähnlich Bedienelemente an der Andockstation vorgesehen sein müssen. lnsbesondere, wenn durch die Riegelmittel der Heizvorgang automatisch gestartet wird, ergibt sich so eine besonders problemlose Bedienbarkeit der Andockstation dadurch, dass lediglich der Tablett-Transportwagen an die Andockstation herangeschoben werden muss, bis die Verriegelung greift, welche den Tablett-Transportwagen festlegt und gleichzeitig den Heizvorgang startet.

Wenn mehrere Andockstationen in Großküchen nebeneinander aufgestellt werden, ergibt sich durch den Verzicht auf seitliche Bedienelemente die Möglichkeit, die vorgeschlagenen Andockstationen besonders platzsparend anzuordnen und beispielsweise schmale Nischen zu nutzen oder eine größere Anzahl von Andockstationen auf einer vorgegebenen Fläche anzuordnen.

Ein Ausführungsbeispiel der Erfindung wird anhand der rein schematischen Zeichnung nachfolgend näher erläutert.

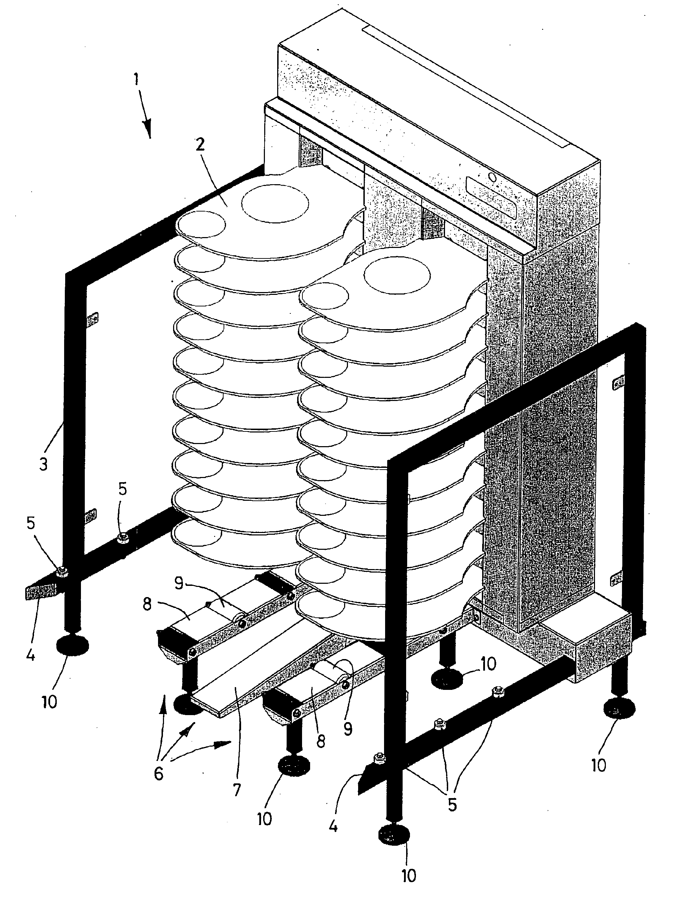

ln der Zeichnung ist mit 1 insgesamt eine Andockstation bezeichnet, die eine Vielzahl von in einem Gehäuse gehaltenen Heizeinrichtungen 2 aufweist, sowie einen Rahmen 3, der nach vorn offen ist, wobei "vorn" als die Seite bezeichnet ist, von welcher aus ein Tablett-Transport-wagen in die Andockstation 1 eingefahren werden kann bzw. an deren Gehäuse angenähert werden kann. Der Rahmen weist im unteren Bereich zwei Leitschrägen 4 auf, wobei dieselben horizontalen Rahmenstreben, welche die Leitschrägen 4 ausbilden, auch seitliche Leitelemente in Form von Seitenrollen 5 aufweisen, welche den Tablett-Transportwagen mittig leiten und Verkantungen vermeiden helfen.

Im mittleren unteren Bereich der Andockstation 1 sind Führungselemente 6 erkennbar, welche den Tablett-Transportwagen bei seiner Annäherung anheben. Diese Führungselemente 6 bestehen aus einer mittleren Rampe 7 sowie aus zwei seitlichen Rollengängen 8. Diese Rollengänge 8 verlaufen flach schräg aufwärts, sodass sie den Tablett-Transportwagen anheben, wenn dieser zunehmend an die Andockstation 1 angenähert wird. Die Rollengänge 8 weisen jeweils einige stoßdämpfende, leise laufende Rollen aus Kunststoff auf, sowie jeweils wenigstens eine metallische Rolle 9, welche elektrisch leitfähig ausgestaltet und gelagert ist, sodass sie durch ihren Kontakt mit elektrisch leitenden Elementen des Tablett-Transportwagens eine potenzialgleiche, elektrisch leitende Verbindung zwischen Tablett-Transportwagen und Andockstation 1 schafft.

Die mittlere Rampe 7 ist federbeweglich bzw. höhenbeweglich ausgestaltet und weist eine Rastnase in ihrem hinteren Bereich auf. Diese Rastnase hintergreift ein Rahmen- oder Kantenelement des Tablett-Transportwagens, wenn der Tablett-Transportwagen ausreichend weit in die Andockstation 1 eingeschoben wurde. Die Rampe 7 dient in diesem Fall nicht dazu, den Tablett-Transportwagen in die Höhe zu führen, wenn dieser zunehmend in die Andockstation 1 eingeschoben wird, sondern sie dient dazu, die erwähnte Rastnase gegen die Federwirkung zunehmend nach unten zu führen, je weiter der Tablett-Transportwagen an die Andockstation 1 angenähert wird. Der vorderste Bereich dieser Rampe 7 kann anschließend als Pedal betätigt werden, um die Rampe 7 abwärts zu führen und die Verriegelung, die sich mittels der Rastnase ergeben hat, zu lösen, sodass der Tablett-Transportwagen aus der Andockstation 1 entfernt werden kann, beispielsweise nach einem Heizvorgang.

Eine Nivellierung der Andockstation 1 und Anpassung an unebene Untergründe, sowie eine gewünschte Höheneinstellung der gesamten Andockstation 1, insbesondere der Heizeinrichtungen 2 kann durch höhenverstellbare Füße 10 erfolgen, die am Rahmen 3 der Andockstation 1 bzw. an den Führungselementen 6 vorgesehen sind.

## Patentansprüche

1. Andockstation zum Erwärmen von Speisen, die in einem Tablett-Transportwagen auf einer Vielzahl von im Abstand übereinander angeordneten Tabletts befindlich sind,
wobei die Andockstation eine Vielzahl von Heizeinrichtungen aufweist, derart, dass bei ausreichend weit an die Andockstation angenähertem Tablett-Transportwagen die Speisen durch die Heizeinrichtungen beheizbar sind,
**gekennzeichnet durch**
schräg nach oben verlaufende Führungselemente (6) an der Andockstation (1),
welche den an die Andockstation (1) heranfahrenden Tablett-Transportwagen bei zunehmender Annäherung anheben,
derart, dass bei vollständig an die Andockstation (1) angenähertem Tablett-Transportwagen die Tabletts des Tablett-Transportwagens einen zum Beheizen vorgesehenen, vorbestimmten Abstand zu den Heizeinrichtungen (2) aufweisen.

2. Andockstation nach Anspruch 1,
**dadurch gekennzeichnet, dass** die Führungselemente (6) einen den Tablett-Transportwagen tragenden Rollengang (8) aufweisen.

3. Andockstation nach Anspruch 1 oder 2,
**dadurch gekennzeichnet, dass** an der Andockstation (1) ein Schalter vorgesehen ist, der erst bei ausreichend weit angenähertem Tablett-Transportwagen die Heinzeinrichtungen (2) freischaltet oder einschaltet.

4. Andockstation nach einem der vorhergehenden Ansprüche,
**gekennzeichnet durch** Riegelmittel, die bei zum Beheizen der Tabletts ausreichend weit angenähertem Tablett-Transportwagen diesen mit der Andockstation (1) verriegeln.

5. Andockstation nach Anspruch 3 und 4,
**dadurch gekennzeichnet, dass** der Schalter durch die Riegelmittel betätigt ist.

6. Andockstation nach einem der vorhergehenden Ansprüche,
**gekennzeichnet durch** ein Kontaktelement an der Andockstation (1), welches dem angenäherten Tablett-Transportwagen elektrisch leitend anliegt, derart, dass die Rahmen (3) und / oder Gehäuse von Andockstation (1) und Tablett-Transportwagen elektrisch leitend miteinander verbunden sind.

7. Andockstation nach den Ansprüchen 2 und 6,
**gekennzeichnet durch** eine elektrisch leitende Rolle (9) des Rollengangs (8).
